# EUROPEAN PATENT SPECIFICATION

(11) **EP 2 728 027 B1**
(45) Date of publication and mention of the grant of the patent: **16.01.2019**
(21) Application number: 11868749.0
(22) Date of filing: 30.06.2011
(51) Int. Cl.: B32B 15/01, C21D 6/00, C21D 8/00, C23C 2/02, C23C 2/06, C23C 2/12, C21D 9/46, C22C 38/22, C22C 38/32, C22C 38/34, C22C 38/38, C22C 38/44, C22C 38/48, C22C 38/50, C22C 38/54, C22C 38/58, C22C 38/60, C21D 8/02, C21D 7/02, C21D 1/673

(54) **HEAT-HARDENED STEEL WITH EXCELLENT CRASHWORTHINESS AND METHOD FOR MANUFACTURING HEAT-HARDENABLE PARTS USING SAME**
WÄRMEGEHÄRTETER STAHL MIT HERVORRAGENDER KOLLISIONSTAUGLICHKEIT UND VERFAHREN ZUR HERSTELLUNG WÄRMEHÄRTBARER TEILE DAMIT
ACIER THERMODURCI AYANT UNE EXCELLENTE RÉSISTANCE AUX CHOCS ET PROCÉDÉ DE FABRICATION DE PIÈCES THERMODURCISSABLES AU MOYEN DUDIT ACIER

(30) Priority: 30.06.2011 KR 20110064159
(43) Date of publication of application: 07.05.2014
(73) Proprietor: Hyundai Steel Company, Incheon 401-712 (KR)
(72) Inventor: NAM, Seung-Man, Seoul 143-150 (KR); IM, Hee-Joong, Pyeongtaek-si Gyeonggi-do 451-885 (KR); LEE, Seung-Ha, Dangjin-gun Chungcheongnam-do 343-827 (KR); KIM, Dong-Eun, Pyeongtaek-si Gyeonggi-do 459-701 (KR); LEE, Bo-Ryong, Incheon 405-714 (KR); KIM, Young-Jin, Anyang-si Gyeonggi-do 431-053 (KR); MOON, Man-Been, Guri-si Gyeonggi-do 471-754 (KR)
(74) Representative: Algemeen Octrooi- en Merkenbureau B.V.
(86) International application number: PCT/KR2011/004785
(87) International publication number: WO 2013/002441

(56) References cited:
- EP-A1- 2 631 307
- EP-A1- 2 719 788
- WO-A1-2009/142362
- JP-A- 2002 294 397
- JP-A- 2004 332 099
- JP-A- 2005 126 817
- JP-A- 2005 126 818
- JP-A- 2007 016 296
- KR-B1- 101 033 767
- KR-B1- 101 033 767

## Description

### [Technical Field]

The present invention relates to a technology for manufacturing a high strength component using heat-treatment hardening steel, and more particularly, to heat-treatment hardening steel having high strength and crashworthiness after heat treatment and a method for manufacturing a heat-treatment hardening component using the same.

### [Background Art]

Recently, automobile components have been developed to be light in weight and to have high strength for improvement of fuel efficiency.

The European patent application EP 2 631 307 (published on 28-08-2013 and claiming the priority date of 22-10-2010) relates to a steel sheet and the method for manufacturing a steel sheet. Such a steel sheet includes, by mass%, 0.18% to 0.35% of C, 1,0% to 3.0% of Mn, 0.01% to 1.0% of Si, 0.001% to 0.02% of P, 0.0005% to 0.01% of S, 0.001 % to 0.01 % of N, 0.01% to 1.0% of Al, 0.005% to 0.2% of Ti, 0.0002% to 0.005% of B, and 0.002% to 2.0% of Cr, and a balance of Fe and inevitable impurities.

The European patent application EP 2 719 788(published on 16-04-2014 and claiming the priority date of 10-06-2011) relates to a hot press-formed product required to have high strength and a process for producing the same, and a thin steel sheet for hot press forming. Such a hot press-formed product has the following chemical element composition: C at 0.15% to 0.35%;Si at 0.5% to 3%;Mn at 0.5% to 2%; P at 0.05% or lower (not including 0%);S at 0.05% or lower (not including 0%); Al at 0.01% to 0.1%; Cr at 0.01% to 1%; B at 0.0002% to 0.01%; Ti at (N content) x 4% to 0.1 %; and N at 0.001 % to 0.01 %,and the remainder consisting of iron and unavoidable impurities.

International application WO2009/142362 relates to a high strength steel and a hot dip galvanized steel sheet, and manufacturing methods thereof. Such a high strength cold rolled steel sheet comprises, by weight percent, 0.05 to 0.3% C, 0.3 to 1.6% Si, 4.0 to 7.0% Mn, 0.5 to 2.0% Al, 0.01 to 0.1% Cr, 0.02 to 0.1% Ni and 0.005 to 0.03% Ti, 5 to 30ppm B, 0.01 to 0.03% Sb, 0.008% or less S, balance Fe and impurities.

Japanese publication JP2007-016296 relates to press-molding a steel sheet. Such a steel sheet has a composition consisting of, by mass, 0.1 to 0.4% C, 0.001 to 3.0% Si, 1.5 to 4.0% Mn, <=0.1% P, <=0.05% S, 0.005 to 0.1% Al, <=0.01% N and the balance Fe with inevitable impurities and also has a microstructure composed of ferrite and pearlite or of ferrite, cementite and pearlite. Recently, with the development of techniques for manufacturing automobile components, hot stamping has been developed. Hot stamping is a process of manufacturing a high strength component by quenching to form a martensite microstructure as soon as a material having a tensile strength of about 500 MPa and heated to about 900°C is formed into a desired shape. Hot stamping may be used to produce high strength components having a tensile strength of 1000 MPa or more.

Steel for hot stamping comprises, in terms of % by weight (wt%), C: 0.23%; Si: 0.24%; Mn: 1.2%; Cr: 0.18%; Mo: 0.0025%; Al: 0.03%; Ti 0.035%; B: 0.002% and the balance of Fe and unavoidable impurities.

Steel having such a composition may exhibit a tensile strength of 490 MPa to 590 MPa and an elongation of 20% to 30% depending on process conditions. When the steel is heated to about 900°C, the steel may exhibit a tensile strength of 100 MPa to 200 MPa and an elongation of 50% to 60%, allowing easy forming. Then, when the steel is subjected to forming in dies and quenching, the formed steel has microstructures approaching full martensite, whereby a finished component has an ultra-high tensile strength of about 1470 MPa. The prepared component may have ultra-high strength and thus does not require a separate reinforcing material to enhance strength.

As such, hot stamping can facilitate weight reduction and reduce the number of welds through elimination of components such as a reinforcing material, thereby improving productivity while reducing manufacturing costs.

However, components manufactured by this process have a drawback in that such components have a low elongation of 6% to 7% due to microstructures approaching full martensite, which is advantageous for securing high strength.

Such low elongation causes brittleness failure of a component due to insufficient absorption of impact when external impact is applied thereto.

### [Disclosure]

### [Technical Problem]

An aspect of the present invention is to provide heat-treatment hardening steel that exhibits high ductility and toughness together with high strength through adjustment of alloy components after heat treatment, thereby providing improved crashworthiness.

Another aspect of the present invention is to provide a method for manufacturing a heat-treatment hardening component using the heat-treatment hardening steel.

### [Technical Solution]

In accordance with one aspect of the present invention, heat-treatment hardening steel comprises, in terms of % by weight (wt%), C: 0.12 ∼ 0.8%; Cr: 0.01 ∼ 2%; Mo: 0.2% or less; B: 0.0005 ∼ 0.08%; Ca: 0.01 or less; Sb: 1.0% or less; at least one of Ti and Nb: 0.2% or less; components satisfying any one of the following compositions i) to iii); and the balance of Fe and unavoidable impurities.

By wt%,
i) Si: 0.5 ∼ 3%; Mn: 1 ∼ 10%; and Al: 0.05 ∼ 2%
ii) Si: 1% or less; Mn: 0.5 ∼ 5%; Al: 0.1 ∼ 2.5%; and Ni: 0.01 ∼ 8%iii) Si: 0.5 ∼ 3%; Mn: 1 ∼ 10%; Al: 0.1 ∼ 2.5%; and Ni: 0.01 ∼ 8%

The steel may have a layer selected from among an Al-Si plated layer, a galvanized layer, and a high temperature oxidation resistant coating layer on a surface thereof.

In accordance with another aspect of the present invention, a method for manufacturing a heat-treatment hardening component includes: (a) preparing a blank formed of the heat-treatment hardening steel as described above; (b) heating the blank; (c) hot-forming and quenching the heated blank in dies; and (d) performing post-treatment of a formed body formed in the (c) hot-forming and quenching.

In accordance with a further aspect of the present invention, a method for manufacturing a heat-treatment hardening component includes: (a) preparing a blank formed of the heat-treatment hardening steel as described above; (a') performing primary-forming of the blank through cold working; (b) heating a primary formed body formed in the (a') performing primary forming; (c) performing secondary-forming and quenching of the heated primary formed body in dies; and (d) performing post-treatment of a secondary formed body formed in the (c) performing secondary-forming and quenching.

### [Advantageous Effects]

The heat-treatment hardening steel according to the present invention may provide a high strength, highly tough and highly ductile component having a tensile strength of 1000 MPa or more, a yield strength of 800 MPa or more, and an elongation of 10% or more through hot stamping. Accordingly, the component manufactured by the method according to the present invention may exhibit improved crashworthiness through high strength and excellent impact absorption capabilities.

### [Description of Drawings]

Figure 1 is a schematic flowchart of a method for manufacturing a heat-treatment hardening component in accordance with one embodiment of the present invention.
Figure 2 is a schematic flowchart of a method for manufacturing a heat-treatment hardening component in accordance with another embodiment of the present invention.
Figure 3 shows a microstructure of a specimen prepared in Comparative Example 1.
Figure 4 shows a microstructure of a specimen prepared in Example 1.

### [Best Mode]

The above and other aspects, features, and advantages of the present invention will become apparent from the detailed description of the following embodiments in conjunction with the accompanying drawings.

It should be understood that the present invention is not limited to the following embodiments and may be embodied in different ways, and that the embodiments are provided for complete disclosure and thorough understanding of the invention by those skilled in the art. The scope of the present invention will be defined only by the claims.

Hereinafter, heat-treatment hardening steel with excellent crashworthiness and a method for manufacturing a heat-treatment hardening component using the same according to the present invention will be described in detail.

### Heat-treatment hardening steel

Heat-treatment hardening steel according to the present invention comprises, by wt%, C: 0.12 ∼ 0.8%; Cr: 0.01 ∼ 2%; Mo: 0.2% or less; at least one of titanium (Ti) and niobium (Nb): 0.2% or less; B: 0.0005 ∼ 0.08%; and Sb: 1.0% or less.

In addition, the heat-treatment hardening steel satisfies at least one of the following compositions i) to iii):
By wt%,
i) Si: 0.5 ∼ 3%; Mn: 1 ∼ 10% and Al: 0.05 ∼ 2%;
ii) Si: 1% or less; Mn: 0.5 ∼ 5%; Al: 0.1 ∼ 2.5% and Ni: 0.01 ∼ 8%;and
iii) Si: 0.5 ∼ 3%; Mn: 1 ∼ 10%; Al: 0.1 ∼ 2.5% and Ni: 0.01 ∼ 8%.

The heat-treatment hardening steel also comprises the balance of Fe and unavoidable impurities.

Now, the amounts and functions of the respective components included in the heat-treatment hardening steel according to the present invention will be described in more detail.

### Carbon (C)

Carbon (C) is added to secure strength of steel. In addition, carbon serves to stabilize an austenite phase according to the amount of carbon enriched in the austenite phase.

Preferably, carbon is present in an amount of 0.12 wt% to 0.8 wt% based on the total weight of the steel. If the carbon content is less than 0.12 wt%, it is difficult to secure sufficient strength. On the contrary, if the carbon content exceeds 0.8 wt%, the steel can suffer from significant deterioration in toughness and weldability despite increase of strength.

### Chromium (Cr)

Chromium (Cr) improves elongation through stabilization of ferrite crystal grains, and increases strength through stabilization of austenite by increasing the amount of carbon enriched in the austenite phase.

Preferably, chromium is present in an amount of 0.01 wt% to 2 wt% based on the total weight of the steel. If the chromium content is less than 0.01 wt%, the added chromium does not provide sufficient functions thereof. On the contrary, a chromium content of greater than 2 wt% makes it difficult to secure sufficient yield strength after heat treatment, and deteriorates wettability.

### Molybdenum (Mo)

Molybdenum (Mo) is an effective element for enhancing strength of steel through precipitation strengthening and solid-solution strengthening. However, if the molybdenum content exceeds 0.2 wt%, the steel can suffer from deterioration in processibility.

Therefore, molybdenum is preferably present in an amount of 0.2 wt% or less based on the total weight of the steel.

### Titanium (Ti), niobium (Nb)

Titanium (Ti) and niobium (Nb) are carbonitride forming elements and sever to enhance strength of steel. However, if the total amount of titanium and niobium exceeds 0.2 wt%, the steel can suffer from deterioration in toughness. Therefore, titanium or niobium is preferably present in a total amount of 0.2 wt% or less based on the total weight of the steel.

### Boron (B)

Boron (B) enhances strength of steel through quenching ability.

Preferably, boron is present in an amount of 0.0005 wt% to 0.08 wt% based on the total weight of the steel. If the boron content is less than 0.0005 wt%, boron does not provide functions thereof. On the contrary, if the boron content exceeds 0.08 wt%, the steel can suffer from significant deterioration in toughness due to excessive increase in quenching ability.

### Antimony (Sb)

Antimony (Sb) enhances coating properties of steel by preventing enrichment of silicon and manganese in grain boundaries. However, if the antimony content exceeds 1%, the steel can suffer from cracking and secondary work embrittlement.

Therefore, antimony is preferably used in an amount of 1% or less based on the total weight of the steel.

### Silicon (Si), manganese (Mn), aluminum (Al), nickel (Ni)

Through studies for long duration, the inventors of the present invention have found that silicon, manganese, aluminum and nickel enhance tensile strength, yield strength and elongation after heat treatment while satisfying at least one of the following compositions i) to iii).

By wt%,
i) Si: 0.5 ∼ 3%; Mn: 1 ∼ 10% and Al: 0.05 ∼ 2%
ii) Si: 1% or less; Mn: 0.5 ∼ 5%; Al: 0.1 ∼ 2.5% and Ni: 0.01 ∼ 8%
iii) Si: 0.5 ∼ 3%; Mn: 1 ∼ 10%; Al: 0.1 ∼ 2.5% and Ni: 0.01 ∼ 8%

In compositions i) to iii), silicon (Si) acts as a deoxidizer and enhances strength of steel through solid-solution strengthening. If the silicon content exceeds the range provided by each of compositions i) to iii), the steel can suffer from deterioration in weldability and coating properties. In addition, in the case of the compositions i) and iii), if the silicon content is less than the proposed range, the steel can suffer from deterioration in weldability.

In compositions i) to iii), manganese (Mn) enhances strength of steel through austenite stabilization. If the manganese content is less than the proposed range in each of i) ∼ iii), the effect of stabilizing the austenite phase becomes insufficient. On the contrary, if the manganese content exceeds the range provided by each of compositions i) ∼ iii), there are problems of deterioration in weldability and toughness.

In compositions i) to iii), aluminum (Al) serves to prevent hydrogen embrittlement. If the aluminum content is less than the proposed range in each of i) ∼ iii), the effect provided by addition of aluminum can become insufficient. On the contrary, if the aluminum content exceeds the range provided by each of compositions i) to iii), aluminum forms excess inclusions, thereby deteriorating ductility and toughness of the steel.

In compositions ii) and iii), nickel (Ni) is advantageous in securing strength and toughness of steel. If the nickel content is less than the proposed range in each of compositions ii) and iii), the effect provided by addition of nickel can become insufficient. Conversely, if the nickel content exceeds the range provided by each of compositions ii) and iii), the effects provided by addition of nickel can become saturated, thereby significantly increasing manufacturing costs.

The heat-treatment hardening steel having the above composition according to the invention may be produced in forms of hot-rolled steel sheets, hot-rolled plated steel sheets, cold-rolled steel sheets, cold-rolled plated steel sheets, high temperature oxidation resistant coated steel sheets, and the like. Here, the heat-treatment hardening steel according to the present invention may have an Al-Si based coating layer, galvanized layer or high temperature oxidation resistant coating layer on a surface thereof in order to prevent decarburization and oxidation in a hot stamping process for fabrication of components described below. The Al-Si based coating layer and the galvanized layer are generally applied to cold-rolled plated steel sheets, without being limited thereto. In addition, the galvanized layer may be formed by various methods such as hot-dip galvanizing, hot-dip galvannealing, electro-galvanizing, and the like.

Here, when the heat-treatment hardening steel according to the present invention is a cold-rolled plated steel sheet, annealing may be performed at a temperature ranging from 650°C to 850°C. If the annealing temperature is less than 650°C, it is difficult to achieve desired effects such as ductility improvement and the like even by annealing. Conversely, if annealing temperature exceeds 850°C, there is a high possibility of enrichment of silicon, manganese, and the like in grain boundaries even by addition of antimony, thereby causing deterioration in coating properties.

On the other hand, the heat-treatment hardening steel having the above composition according to the invention may have a tensile strength of 490 MPa to 980 MPa, a yield strength of 370 MPa to 600 MPa, and an elongation of 20% to 50% according to process conditions, that is, hot rolling, cold rolling, annealing, and the like. Although the heat-treatment hardening steel does not need to have these mechanical properties, heat-treatment hardening steel having these mechanical properties is advantageous in forming through hot stamping for fabrication of components.

In addition, the heat-treatment hardening steel having the above composition and mechanical properties according to the present invention may have a composite microstructure including martensite and retained austenite after heat treatment.

Further, the heat-treatment hardening steel having the above composition and mechanical properties according to the present invention may have a tensile strength of 1000 MPa or more, a yield strength of 800 MPa or more, and an elongation of 10% or more after heat treatment, since the retained austenite structure is included in the microstructure even after hot stamping.

### Method of manufacturing heat-treatment hardening component

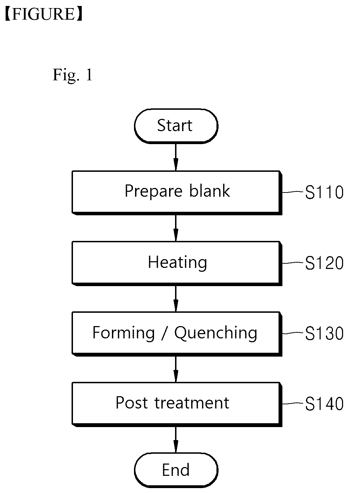

Figure 1 is a schematic flowchart of a method for manufacturing a heat-treatment hardening component in accordance with one embodiment of the invention.

Herein, the term "component" may refer to collision members of automobiles, without being limited thereto.

Referring to Figure 1, the method for manufacturing a heat-treatment hardening component includes preparing a blank (S110), heating the blank (S120), forming/quenching (S130), and post-treatment (S140).

In operation of preparing a blank (S110), a blank is prepared from the heat-treatment hardening steel having the composition according to the present invention.

As described above, the heat-treatment hardening steel may have a tensile strength of 490 MPa to 980 MPa, a yield strength of 370 MPa to 600 MPa, and an elongation of 20% to 50%. In addition, considering blank heating (S120) and forming/quenching (S130) described hereinafter, the steel may have an Al-Si based coating layer, a galvanized layer, a high temperature oxidation resistant coating layer or the like formed on the surface thereof.

Next, in operation of heating the blank (S120), the blank is heated to a temperature suitable for hot stamping. Heating may be performed outside dies which will be used for hot stamping, that is, forming/quenching, and may be performed inside the dies after heating is performed to a predetermined temperature outside the dies.

The heating temperature may range from 700°C to 1100°C. If the heating temperature is less than 700°C, austenite formation becomes insufficient, thereby causing insufficient strength after the operation of forming/quenching (S130). Conversely, if the heating temperature exceeds 1100°C, it is difficult to secure high ductility due to an insufficient fraction of the retained austenite after the operation of forming/quenching (S130), thereby causing deterioration of crashworthiness.

Next, in the operation of forming/quenching (S130), the blank heated in the dies is formed into a formed body having a predetermined shape, which in turn is subjected to quenching inside the dies to secure desired properties.

Quenching may be performed to a martensite transformation start temperature or less, for example, to a temperature ranging from about 80°C to about 500°C, in order to secure the martensite fraction. In addition, quenching may be performed at a cooling rate of 10°C/sec to 300°C/sec. If the cooling rate is less than 10°C/sec, it is difficult to secure sufficient strength. Conversely, if the quenching rate exceeds 300°C/sec, it is difficult to secure toughness and ductility.

After forming/quenching, the formed body may have a composite microstructure comprising martensite and retained austenite. As a result, the formed body formed through forming/quenching may have a tensile strength of 1000 MPa or more, a tensile strength of 800 MPa or more, and an elongation of 10% or more.

In post treatment (S140), the formed body formed through forming/quenching is subjected to laser processing to perform trimming, piercing, and the like.

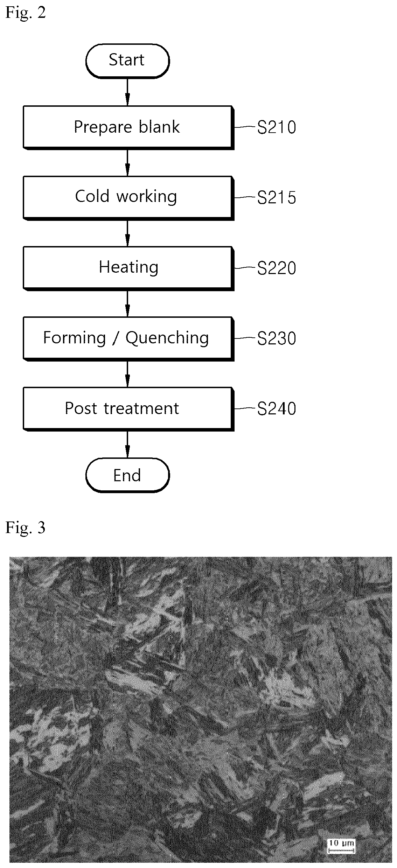

Figure 2 is a schematic flowchart of a method for manufacturing a heat-treatment hardening component in accordance with another embodiment.

Referring to Figure 2, the method for manufacturing a heat-treatment hardening component includes blank preparation (S210), cold working (S215), heating the blank (S220), forming/quenching (S230), and post treatment (S240).

In the embodiment shown in Figure 2, the method further includes cold rolling (S215). In operation of cold rolling (S215), the blank is subjected to primary forming through cold working. In this case, during primary forming through cold working, a primary formed body is prepared through forming, trimming, piercing, and the like. Thus, in post treatment (S240), laser processing is performed on a portion of a secondary formed body, which is subjected to secondary forming (S230) through forming/quenching within dies.

### Examples

Next, the present invention will be described in more detail with reference to examples. Here, the following examples are provided for illustration only and should not be construed in any way as limiting the present invention.

Descriptions of details apparent to those skilled in the art will be omitted.

### 1. Preparation of specimen

In order to observe heat-treatment hardening properties of steel according to alloy compositions, specimens of Examples 1 to 4 and Comparative Example 1 having compositions as listed in Table 1 and mechanical properties before heat treatment as listed in Table 2 were heated to 900°C, left for 5 minutes, and cooled to 100°C at an average cooling rate of 50°C/sec.

**Table 1 (Unit: wt%)**

| | C | Si | Mn | Cr | Mo | Al | Ti | Nb | B | Ni | Sb |
|---|---|---|---|---|---|---|---|---|---|---|---|
| Comparative Example 1 | 0.229 | 0.238 | 1.19 | 0.183 | 0.0025 | 0.03 | 0.036 | - | 0.002 | - | - |
| Comparative Example | 0.4 | 1.5 | 5.5 | 0.2 | 0.01 | 0.05 | 0.05 | 0.05 | 0.003 | 3.0 | 0.8 |
| Example 1 | 0.3 | 1.0 | 7.5 | 0.3 | 0.01 | 1.5 | 0.05 | - | 0.003 | - | 0.8 |
| Example 2 | 0.3 | 0.4 | 3.0 | 0.3 | 0.01 | 2.0 | 0.05 | 0.01 | 0.005 | 2.0 | 0.8 |
| Example 3 | 0.4 | 1.7 | 6.0 | 0.2 | 0.01 | 2.0 | - | 0.10 | 0.002 | 3.0 | 0.8 |

### 2. Mechanical Properties

Table 2 shows mechanical properties of the specimens of Examples 1 to 3 and Comparative Example 1 and 2 before and after heat treatment.

**Table 2**

| | Before heat treatment | | | After heat treatment | | | |
|---|---|---|---|---|---|---|---|
| | Tensile strength (MPa) | Yield strength (MPa) | Elongation (%) | Tensile strength (MPa) | Yield strength (MPa) | Elongation (%) | Fraction of retained austenite (%) |
| Comparative Example 1 | 510 | 380 | 25 | 1470 | 840 | 6.0 | < 1% |
| Comparative Example 2 | 710 | 491 | 22 | 1884 | 1138 | 15.1 | 10∼40% |
| Example 1 | 515 | 383 | 26 | 1291 | 1136 | 15.0 | 3∼5% |
| Example 2 | 520 | 382 | 24 | 1302 | 1124 | 14.8 | 5∼15% |
| Example 3 | 723 | 490 | 21 | 1817 | 1054 | 14.7 | 30∼60% |

Referring to Table 2, the specimens of Examples 1 to 3 and Comparative Example 1 and 2 exhibited similar mechanical properties before heat treatment.

However, after heat treatment, the specimen of Comparative Example 1 had a low elongation of 6% despite very high tensile strength. On the contrary, although the specimens of Examples 1 to 3 had slightly lower tensile strength than the specimens of Comparative Example 1, these specimens had an elongation of about 15% and exhibited relatively high yield strength.

Accordingly, upon application of external impact, the specimen of Comparative Example 1 can suffer from brittleness failure due to low yield strength and elongation as compared with tensile strength, whereas the specimens of Examples 1 to 3 can sufficiently absorb the impact due to relatively high yield strength and elongation.

In addition, in order to measure the fraction of retained austenite, various tests such as microscopic observation, magnetic measurement, X-ray diffraction analysis, and the like were performed. As a result, although the specimens of Examples 1 to 3 have different values according to the measurement methods, these specimens include retained austenite in an area fraction of at least 1% or more.

However, the specimen of Comparative Example 1 included retained martensite in an area fraction of less than 1% even by any measurement methods, and thus had a full martensite microstructure.

Difference in physical properties after heat treatment between the specimens of Examples 1 to 3 and Comparative Example 1 can be confirmed through difference in final microstructure.

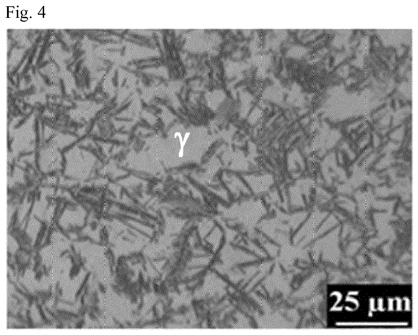

Figure 3 shows the microstructure of a specimen prepared in Comparative Example 1, and Figure 4 shows the microstructure of a specimen prepared in Example 1.

Referring to Figure 3, the specimen of Comparative Example 1 had a microstructure approaching full martensite. On the other hand, referring to Figure 4, it can be seen that the specimen of Example 1 includes retained austenite (γ) in addition to martensite.

By such microstructures, the specimen of Comparative Example 1 can have a very low elongation despite very high yield strength, whereas the specimen of Example 1 can have high elongation.

Although some embodiments have been disclosed herein, it should be understood that these embodiments are provided for illustration only and various modifications, changes, alterations and equivalent embodiments can be made without departing from the scope of the present invention. Therefore, the scope and sprit of the invention should be defined only by the accompanying claims.

## Claims

1. Heat-treatment hardening steel consisting of:, by wt%, C: 0.12 ∼ 0.8%; Cr: 0.01 ∼ 2%; Mo: 0.2% or less (not including 0%);; B: 0.0005 ∼ 0.08%; Ca: 0.01 or less; Sb: 1.0% or less (not including 0%);; at least one of Ti and Nb: 0.2% or less; components satisfying any one of the following compositions i) to iii); and the balance of Fe and unavoidable impurities.
By wt%,
i) Si: 0.5 ∼ 3%; Mn: 1 ∼ 10%; and Al: 0.05 ∼ 2%
ii) Si: 1% or less; Mn: 0.5 ∼ 5%; Al: 0.1 ∼ 2.5%; and Ni: 0.01 ∼ 8%
iii) Si: 0.5 ∼ 3%; Mn: 1 ∼ 10%; Al: 0.1 ∼ 2.5%; and Ni: 0.01 ∼ 8%.

2. The heat-treatment hardening steel according to claim 1, wherein the steel comprises a composite microstructure of martensite and retained austenite after heat treatment in a range from 700°C to 1100°C.

3. The heat-treatment hardening steel according to claim 1, wherein the steel has a tensile strength of 490 MPa to 980 MPa, a yield strength of 370 MPa to 600 MPa and an elongation of 20% to 50%.

4. The heat-treatment hardening steel according to claim 3, wherein the steel has a tensile strength of 1000 MPa or more, a yield strength of 800 MPa or more and an elongation of 10% or more after heat treatment in a range from 700°C to 1100°C.

5. The heat-treatment hardening steel according to claim 1, wherein the steel has at least one layer selected from an Al-Si based coating layer, a galvanized layer and a high temperature oxidation resistant coating layer on a surface thereof.

6. A method for manufacturing a heat-treatment hardening component, comprising:
(a) preparing a blank formed of heat-treatment hardening steel, the heat-treatment hardening steel consisting of:, by wt%, C: 0.12 ∼ 0.8%, Cr: 0.01 ∼ 2%, Mo: 0.2% or less (not including 0%);, B: 0.0005 ∼ 0.08%, Ca: 0.01 or less, Sb: 1.0% or less (not including 0%);, at least one of Ti and Nb: 0.2% or less, components satisfying anyone of the following compositions i) to iii), and the balance of Fe and unavoidable impurities;
By wt%,
i) Si: 0.5 ∼ 3%; Mn: 1 ∼ 10% and Al: 0.05 ∼ 2%
ii) Si: 1% or less; Mn: 0.5 ∼ 5%; Al: 0.1 ∼ 2.5% and Ni: 0.01 ∼ 8%
iii) Si: 0.5 ∼ 3%; Mn: 1 ∼ 10%; Al: 0.1 ∼ 2.5% and Ni: 0.01 ∼ 8%,
(b) heating the blank;
(c) hot-forming and quenching the heated blank in dies; and
(d) performing post-treatment of a formed body formed in the (c) hot-forming and quenching.

7. The method according to claim 6, wherein the (b) heating is performed by heating the blank to a temperature of 700°C to 1100°C.

8. The method according to claim 6, wherein, in the (c) hot-forming and quenching, quenching is performed by cooling the heated blank in the dies at a rate of 10°C/sec to 300°C/sec to a martensite transformation start temperature or less of the heat-treatment hardening steel.

9. The method according to claim 6, wherein the heat-treatment hardening steel has at least one layer selected from an Al-Si based coating layer, a galvanized layer and a high temperature oxidation resistant coating layer on a surface thereof.

10. A method for manufacturing a heat-treatment hardening component, comprising:
(a) preparing a blank formed of heat-treatment hardening steel, the heat-treatment hardening steel consisting of:, by wt%, C: 0.12 ∼ 0.8%, Cr: 0.01 ∼ 2%, Mo: 0.2% or less (not including 0%);, B: 0.0005 ∼ 0.08%, Ca: 0.01 or less, Sb: 1.0% or less (not including 0%);, at least one of Ti and Nb: 0.2% or less, components satisfying anyone of the following compositions i) to iii), and the balance of Fe and unavoidable impurities;
By wt%,
i) Si: 0.5 ∼ 3%; Mn: 1 ∼ 10% and Al: 0.05 ∼ 2%
ii) Si: 1% or less; Mn: 0.5 ∼ 5%; Al: 0.1 ∼ 2.5% and Ni: 0.01 ∼ 8%
iii) Si: 0.5 ∼ 3%; Mn: 1 ∼ 10%; Al: 0.1 ∼ 2.5% and Ni: 0.01 ∼ 8%,
(a') performing primary-forming of the blank through cold working;
(b) heating a primary formed body formed in the (a') performing primary forming;
(c) performing secondary-forming and quenching of the heated primary formed body in dies; and
(d) performing post-treatment of a secondary formed body formed in the (c) performing secondary-forming and quenching.

11. The method according to claim 10, wherein the (b) heating is performed by heating the blank to a temperature of 700°C to 1100°C.

12. The method according to claim 10, wherein, in the (c) performing secondary-forming and quenching, quenching is performed by cooling the heated blank in the dies at a rate of 10°C/sec to 300°C/sec to a martensite transformation start temperature or less of the heat-treatment hardening steel.

13. The method according to claim 10, wherein the heat-treatment hardening steel has at least one layer selected from an Al-Si based coating layer, a galvanized layer and a high temperature oxidation resistant coating layer on a surface thereof.

## Patentansprüche

1. Durch Wärmebehandlung härtender Stahl, bestehend aus, in Gewichtsprozent: C: 0,12 ∼ 0,8 %; Cr: 0,01 ∼ 2 %; Mo: 0,2 % oder weniger (nicht einschließend 0 %); B: 0,0005 ∼ 0,08 %; Ca: 0,01 % oder weniger; Sb: 1,0 % oder weniger (nicht einschließend 0 %); mindestens einem von Ti und Nb: 0,2 % oder weniger; Komponenten, die eine beliebige der folgenden Zusammensetzungen i) bis iii) erfüllen; und zum Rest aus Fe und unvermeidlichen Verunreinigungen;
In Gewichtsprozent,
i) Si: 0,5 ∼ 3 %; Mn: 1 ∼ 10 %; und Al: 0,05 ∼ 2 %
ii) Si: 1 % oder weniger; Mn: 0,5 ∼ 5 %; Al: 0,1 ∼ 2,5 %; und Ni: 0,01 ∼ 8 %
iii) Si: 0,5 - 3 %; Mn: 1 ∼ 10 %; Al: 0,1 ∼ 2,5 %; und Ni: 0,01 - 8 %.

2. Durch Wärmebehandlung härtender Stahl gemäß Anspruch 1, wobei der Stahl nach der Wärmebehandlung in einem Bereich von 700 °C bis 1100 °C eine Verbundmikrostruktur von Martensit und Restaustenit umfasst.

3. Durch Wärmebehandlung härtender Stahl gemäß Anspruch 1, wobei der Stahl eine Zugfestigkeit von 490 MPa bis 980 MPa, eine Streckgrenze von 370 MPa bis 600 MPa und eine Dehnung von 20 % bis 50 % aufweist.

4. Durch Wärmebehandlung härtender Stahl gemäß Anspruch 3, wobei der Stahl nach der Wärmebehandlung in einem Bereich von 700 °C bis 1100 °C eine Zugfestigkeit von 1000 MPa oder mehr, eine Streckgrenze von 800 MPa oder mehr und eine Dehnung von 10 % oder mehr aufweist.

5. Durch Wärmebehandlung härtender Stahl gemäß Anspruch 1, wobei der Stahl mindestens eine Schicht aufweist, die aus einer Überzugsschicht auf Al-Si-Basis, einer galvanisierten Schicht und einer gegen Hochtemperaturoxidation beständigen Überzugsschicht auf einer Oberfläche davon ausgewählt ist.

6. Verfahren zur Herstellung einer durch Wärmebehandlung härtenden Komponente, umfassend:
a) Erzeugen eines Rohlings aus durch Wärmebehandlung härtendem Stahl, wobei der durch Wärmebehandlung härtende Stahl, in Gewichtsprozent, aus Folgendem besteht: C: 0,12 ∼ 0,8 %; Cr: 0,01 ∼ 2 %; Mo: 0,2 % oder weniger (nicht einschließend 0 %); B: 0,0005 ∼ 0,08 %; Ca: 0,01 % oder weniger; Sb: 1,0 % oder weniger (nicht einschließend 0 %); mindestens einem von Ti und Nb: 0,2 % oder weniger; Komponenten, die eine beliebige derfolgenden Zusammensetzungen i) bis iii) erfüllen; und zum Rest aus Fe und unvermeidlichen Verunreinigungen;
In Gewichtsprozent,
i) Si: 0,5 ∼ 3 %; Mn: 1 ∼ 10 %; und Al: 0,05 ∼ 2 %
ii) Si: 1 % oder weniger; Mn: 0,5 ∼ 5 %; Al: 0,1 ∼ 2,5 %; und Ni: 0,01 ∼ 8 %
iii) Si: 0,5 - 3 %; Mn: 1 ∼ 10 %; Al: 0,1 ∼ 2,5 %; und Ni: 0,01 - 8 %
b) Erwärmen des Rohlings;
c) Heißumformen und Abschrecken des erwärmten Rohlings in Formwerkzeugen; und
d) Durchführen einer Nachbehandlung eines durch das Heißformen und Abschrecken in c) gebildeten Formkörpers.

7. Verfahren gemäß Anspruch 6, wobei das Erwärmen in b) durch Erwärmen des Rohlings auf eine Temperatur von 700 °C bis 1100 °C durchgeführt wird.

8. Verfahren gemäß Anspruch 6, wobei beim Heißformen und Abschrecken in c) das Abschrecken durch Abkühlen des erwärmten Rohlings in den Formwerkzeugen mit einer Rate von 10 °C/s bis 300 °C/s auf eine Martensit-Transformations-Starttemperatur oder weniger des durch Wärmebehandlung härtenden Stahls durchgeführt wird.

9. Verfahren gemäß Anspruch 6, wobei der durch Wärmebehandlung härtende Stahl mindestens eine Schicht aufweist, die aus einer Überzugsschicht auf Al-Si-Basis, einer galvanisierten Schicht und einer gegen Hochtemperaturoxidation beständigen Überzugsschicht auf einer Oberfläche davon ausgewählt ist.

10. Verfahren zur Herstellung einer durch Wärmebehandlung härtenden Komponente, umfassend:
a) Erzeugen eines Rohlings aus durch Wärmebehandlung härtendem Stahl, wobei der durch Wärmebehandlung härtende Stahl, in Gewichtsprozent, aus Folgendem besteht: C: 0,12 ∼ 0,8 %; Cr: 0,01 ∼ 2 %; Mo: 0,2 % oder weniger (nicht einschließend 0 %); B: 0,0005 ∼ 0,08 %; Ca: 0,01 % oder weniger; Sb: 1,0 % oder weniger (nicht einschließend 0 %); mindestens einem von Ti und Nb: 0,2 % oder weniger; Komponenten, die eine beliebige derfolgenden Zusammensetzungen i) bis iii) erfüllen; und zum Rest aus Fe und unvermeidlichen Verunreinigungen;
In Gewichtsprozent,
i) Si: 0,5 ∼ 3 %; Mn: 1 ∼ 10 %; und Al: 0,05 ∼ 2 %
ii) Si: 1 % oder weniger; Mn: 0,5 ∼ 5 %; Al: 0,1 ∼ 2,5 %; und Ni: 0,01 ∼ 8 %
iii) Si: 0,5 ∼ 3 %; Mn: 1 ∼ 10 %; Al: 0,1 ∼ 2,5 %; und Ni: 0,01 ∼ 8 %
a') Durchführen eines Primärformens des Rohlings mittels Kaltumformen;
b) Erwärmen eines beim Durchführen des Primärformens in a') gebildeten primärgeformten Körpers;
c) Durchführen eines Sekundärformens und Abschreckens des erwärmten primärgeformten Körpers in Formwerkzeugen; und
d) Durchführen einer Nachbehandlung eines beim Durchführen des Sekundärformens und Abschreckens in c) gebildeten sekundärgeformten Körpers.

11. Verfahren gemäß Anspruch 10, wobei das Erwärmen in b) durch Erwärmen des Rohlings auf eine Temperatur von 700 °C bis 1100 °C durchgeführt wird.

12. Verfahren gemäß Anspruch 10, wobei beim Durchführen des Sekundärformens und Abschreckens in c) das Abschrecken durch Abkühlen des erwärmten Rohlings in den Formwerkzeugen mit einer Rate von 10 °C/s bis 300 °C/s auf eine Martensit-Transformations-Starttemperatur oder weniger des durch Wärmebehandlung härtenden Stahls durchgeführt wird.

13. Verfahren gemäß Anspruch 10, wobei der durch Wärmebehandlung härtende Stahl mindestens eine Schicht aufweist, die aus einer Überzugsschicht auf Al-Si-Basis, einer galvanisierten Schicht und einer gegen Hochtemperaturoxidation beständigen Überzugsschicht auf einer Oberfläche davon ausgewählt ist.

## Revendications

1. Acier durci par traitement thermique constitué par : en % en poids, C : 0,12 à 0,8% ; Cr : 0,01 à 2% ; Mo : 0,2% ou moins (n'incluant pas 0%) ; B : 0,0005 à 0,08% ; Ca : 0,01 ou moins ; Sb : 1,0% ou moins (n'incluant pas 0%) ; au moins l'un de Ti et de Nb : 0,2% ou moins ; des composants satisfaisant l'une quelconque des compositions i) à iii) suivantes ; et le reste étant du Fe et des impuretés inévitables,
en % en poids,
i) Si : 0,5 à 3% ; Mn : 1 à 10% ; et Al : 0,05 à 2%
ii) Si : 1% ou moins ; Mn : 0,5 à 5% ; Al : 0,1 à 2,5% ; et Ni : 0,01 à 8%
iii) Si : 0,5 à 3% ; Mn : 1 à 10% ; Al : 0,1 à 2,5% et Ni : 0,01 à 8%.

2. Acier durci par traitement thermique selon la revendication 1, dans lequel l'acier comprend une microstructure composite de martensite et d'austénite résiduelle après traitement thermique à une température se trouvant dans la plage allant de 700°C à 1100°C.

3. Acier durci par traitement thermique selon la revendication 1, dans lequel l'acier a une résistance à la traction allant de 490 MPa à 980 MPa, une limite d'élasticité allant de 370 MPa à 600 MPa et un allongement allant de 20% à 50%.

4. Acier durci par traitement thermique selon la revendication 3, dans lequel l'acier a une résistance à la traction supérieure ou égale à 1000 MPa, une limite d'élasticité supérieure ou égale à 800 MPa et un allongement supérieur ou égal à 10% après traitement thermique à une température se trouvant dans la plage allant de 700°C à 1100°C.

5. Acier durci par traitement thermique selon la revendication 1, dans lequel l'acier a au moins une couche choisie parmi une couche de revêtement à base de Al-Si, une couche galvanisée et une couche de revêtement résistant à l'oxydation à haute température sur une surface de celui-ci.

6. Procédé de fabrication d'un composant durci par traitement thermique, comprenant le fait :
(a) de préparer une ébauche formée d'acier durci par traitement thermique, l'acier durci par traitement thermique étant constitué par : en % en poids, C : 0,12 à 0,8%, Cr : 0,01 à 2%, Mo : 0,2% ou moins (n'incluant pas 0%) ; B : 0,0005 à 0,08%, Ca : 0,01 ou moins, Sb : 1,0% ou moins (n'incluant pas 0%) ; au moins l'un de Ti et de Nb : 0,2% ou moins, des composants satisfaisant l'une quelconque des compositions i) à iii) suivantes, et le reste étant du Fe et des impuretés inévitables ;
en % en poids,
i) Si : 0,5 à 3% ; Mn : 1 à 10% et Al : 0,05 à 2%
ii) Si : 1% ou moins ; Mn : 0,5 à 5% ; Al : 0,1 à 2,5% et Ni : 0,01 à 8%
iii) Si : 0,5 à 3% ; Mn : 1 à 10% ; Al : 0,1 à 2,5% et Ni : 0,01 à 8%,
(b) de chauffer l'ébauche ;
(c) de former à chaud et de tremper l'ébauche chauffée dans des matrices ; et
(d) de réaliser un post-traitement d'un corps ayant subi un formage qui est formé dans l'étape (c) de formage à chaud et de trempe.

7. Procédé selon la revendication 6, dans lequel l'étape (b) de chauffage est réalisée en chauffant l'ébauche jusqu'à une température allant de 700°C à 1100°C.

8. Procédé selon la revendication 6, dans lequel, dans l'étape (c) de formage à chaud et de trempe, la trempe est réalisée en refroidissant l'ébauche chauffée dans les matrices à une vitesse allant de 10°C/s à 300°C/s jusqu'à une température inférieure ou égale à une température de début de transformation martensitique de l'acier durci par traitement thermique.

9. Procédé selon la revendication 6, dans lequel l'acier durci par traitement thermique a au moins une couche choisie parmi une couche de revêtement à base de Al-Si, une couche galvanisée et une couche de revêtement résistant à l'oxydation à haute température sur une surface de celui-ci.

10. Procédé de fabrication d'un composant durci par traitement thermique, comprenant le fait :
(a) de préparer une ébauche formée d'acier durci par traitement thermique, l'acier durci par traitement thermique est constitué par : en % en poids, C : 0,12 à 0,8% ; Cr : 0,01 à 2% ; Mo : 0,2% ou moins (n'incluant pas 0%) ; B : 0,0005 à 0,08% ; Ca : 0,01 ou moins ; Sb : 1,0% ou moins (n'incluant pas 0%) ; au moins l'un de Ti et de Nb : 0,2% ou moins ; des composants satisfaisant l'une quelconque des compositions i) à iii) suivantes ; et le reste étant du Fe et des impuretés inévitables,
en % en poids,
i) Si : 0,5 à 3% ; Mn : 1 à 10% ; et Al : 0,05 à 2%
ii) Si : 1% ou moins ; Mn : 0,5 à 5% ; Al : 0,1 à 2,5% ; et Ni : 0,01 à 8%
iii) Si : 0,5 à 3% ; Mn : 1 à 10% ; Al : 0,1 à 2,5% et Ni : 0,01 à 8%,
(a') de réaliser un formage primaire de l'ébauche par écrouissage ;
(b) de chauffer un corps ayant subi un formage primaire qui est formé dans l'étape (a') de réalisation de formage primaire ;
(c) de réaliser un formage secondaire et une trempe du corps ayant subi un formage primaire chauffé dans des matrices ; et
(d) de réaliser un post-traitement d'un corps ayant subi un formage secondaire qui est formé dans l'étape (c) de réalisation de formage secondaire et de trempe.

11. Procédé selon la revendication 10, dans lequel l'étape (b) de chauffage est réalisée en chauffant l'ébauche jusqu'à une température allant de 700°C à 1100°C.

12. Procédé selon la revendication 10, dans lequel, dans l'étape (c) de réalisation de formage secondaire et de trempe, la trempe est réalisée en refroidissant l'ébauche chauffée dans les matrices à une vitesse allant de 10°C/s à 300°C/s jusqu'à une température inférieure ou égale à une température de début de transformation martensitique de l'acier durci par traitement thermique.

13. Procédé selon la revendication 10, dans lequel l'acier durci par traitement thermique a au moins une couche choisie parmi une couche de revêtement à base de Al-Si, une couche galvanisée et une couche de revêtement résistant à l'oxydation à haute température sur une surface de celui-ci.
